# EUROPEAN PATENT APPLICATION

(11) **EP 1 764 695 A1**
(43) Date of publication of application: **21.03.2007**
(21) Application number: 05291830.7
(22) Date of filing: 02.09.2005
(51) Int. Cl.: G06F 11/36

(54) **Cross platform system and method for tracing communication between a smart card and a smart card related application**

(71) Applicant: Axalto S.A., 92120 Montrouge (FR)
(72) Inventor: Aussel, Jean-Daniel, c/o Axalto S.A., 92120 Montrouge (FR); Mahaindra, Ketut, c/o Axalto S.A., 92120 Montrouge (FR)
(74) Representative: Cassagne, Philippe M.J.

(57) **Abstract**

A smart card related application communicates with a smart card (or at least has access to smart card communications) via a smart card services component.

A Method for tracing smart card communications is disclosed, the method comprising the replacement of the smart card services component by a modified smart card services component after the smart card related application is launched.

A system comprising a tracer and implementing the aforementioned method is also disclosed.

## Description

The present invention concerns smart card related tools (such as smart card software development kits, smart card integration kits, smart card software simulators, smart card hardware simulators, or smart card debuggers) used in connection with smart card related applications. Smart card related applications are applications supporting communication with smart cards or designed to access smart card communications. The smart cards in question may be of any type (GSM smart cards for mobile communications, banking smart cards such as VISA cards, healthcare smart cards, etc.).

Examples of smart card related applications include e-commerce software solutions (enabling secure online purchases thanks to cryptographic smart cards), smart card enabled VPN (Virtual Private Network) software, secure e-mail solutions (enabling smart card based encryption and signature of e-mails), or applications available to the public in French Sécurité Sociale offices, public kiosks embedding such applications being used by the public in order to update Sesame Vitale healthcare smart cards. Smart card related tools are themselves examples of smart card related applications, and certain smart card related tools are used for developing or testing other smart card related tools.

Smart card related applications are able to communicate with smart cards and/or access smart card communications thanks to smart card services components. Smart card services components are software components that implement smart card services. Smart card related applications call smart card services components in order to obtain the desired services. Examples of smart card services include connection to the smart card, disconnection from the smart card, smart card reset, sending commands to the smart card, etc.

In computer science, software is generally organized in multiple layers. Such layered software architectures provide benefits such as the possibility to modify a layer without changing other layers, or reusing already available layers (instead of developing the same software parts several times). Low-level layers are those that are the closest to the hardware parts of the computer (for example drivers for devices connected in the computer are very low-level layers). On the opposite, high-level layers are those closest to the user of the computer. For example a graphical user interface is a very high-level layer. Higher-level layers call lower-level layers in order to perform specific tasks.

In such layered architectures, smart card related applications are in higher layers than smart card services components, which are in lower layers and therefore often described as "low-level".

Since low-level layers are generally used by many higher-level layers, low-level layers are often standardized. There are many standards for smart card services components. PC/SC (Personal Computer / Smart Card) is a well-known standard defining the APIs (Application Program Interfaces) and behavior of a set of smart card services components (most notably the resource manager RM, the smart card service provider SSP, and the smart card cryptographic service provider CSP) aimed at managing the communications with smart cards, and certain cryptographic operations related to smart cards and other cryptographic devices.

The CSP and SSP components are built on top of the RM (they call the RM for accessing smart cards), therefore they are at a higher level than the RM, although they are considered low-level components since they are themselves called by smart card related applications.

Microsoft^{™} has implemented its own set of PC/SC compliant smart card services components, which constitute a subset of the PC/SC specification (with certain Microsoft proprietary features, however due to the widespread use of Microsoft^{™} products such proprietary features are considered standard). Microsoft^{™} provides this set of PC/SC compliant smart card services components natively within recent Windows^{™} operating systems such as Windows 2000 or Windows XP. This set includes in particular a DLL (dynamic link library) named WINSCARD.DLL, which provides a number of base services for accessing smart cards (WINSCARD.DLL is a smart card resource manager helper library).

PC/SC has also been implemented on other operating systems, including Linux (MUSCLE's PCSClite being a popular version).

Other types of standard smart card services components (alternative or complementary to PC/SC) exist although PC/SC tends to prevail in the field of PCs (Personal Computers). Many of such alternatives have been integrated with PC/SC in the sense that they call the PC/SC resource manager instead of implementing their own low-level communication services with smart cards. For examples, most recent implementations of standards such as OCF (Open Card Framework) or PKCS#11 (Public Key Cryptography Standard number 11) have been built on top of the PC/SC Resource Manager.

There are also a number of proprietary smart card services components in certain fields (most often dedicated devices or very specific products), which do not use PC/SC or any other standard at all and are usually specific to a business or vendor.

Current smart card related applications perform at least part of the communications with smart cards via so-called APDUs (Application Protocol Data Unit) standardized in ISO 7816. Currently most of the communication is based on APDUs. However, smart card communications also contain other elements such as smart card events (e.g. power-up, reset, smart card insertion, etc.). With the emergence of new USB smart cards, and possibly other standards in the future, other elements may be used in smart card communications.

Many smart card related tools have the capability to trace smart cards communications. Tracing communications consists in recording the communications. For example if a "read" APDU is sent by the smart card related application to the smart card, the bytes forming the read command, the read command parameters and the read command output are recorded, those bytes forming the "read" APDU. The output of the recording operation is called a trace. Traces enable analysis or processing of the communications. Tracing can be performed at different levels, for example at smart card reader level or at smart card services component level (e.g. at PC/SC resource manager level or PC/SC cryptographic service provider level). By tracing at different level different types of communications can be recorded (e.g. the overhead introduced by the protocol between the smart card reader and the smart card reader driver can be traced, or the CSP calls can be traced).

In the rest of the document we will use the terms "trace" and "tracing" which will be considered synonymous with "log" and "logging".

The invention concerns more specifically components known as tracers, in particular APDU tracers usually available in smart card related tools.

Tracers perform the tracing operations discussed above.

Tracers are useful for application developers. For example, application developers may use traces to obtain historical information on the communication with the smart card in order to debug the application they are developing, or technical support employees can use the traces in order to diagnose a problem or test products.

Tracing can be used in PCs for tracing smart card communications in systems involving PC based smart card related applications (i.e. smart card related applications residing on the PC).

Many PC based smart card related applications communicate with a smart card via a smart card reader (such as a PC/SC compliant smart card reader) in which the smart card is inserted, the smart card reader being connected to that PC via a port available on that PC (most often an RS232, PCMCIA or USB port).

However, certain PC based smart card related applications are designed to communicate with a smart card via other hardware equipments interfacing with the PC.

For example, PC based spy software is a PC based smart card related application designed to spy the communications between a smart card and a smart card related application residing on a hardware equipment distinct from the PC (e.g. a cellular phone) via another hardware equipment (spy hardware). In addition to spying the communications, the spy software can decide to add or drop certain communications between the smart card and the cellular phone, or to alter certain communications (for example an APDU for sending an authentication command can be changed by an erroneous authentication command in order to verify that the smart card behaves correctly by denying access).

Such PC based smart card related applications normally do not use PC/SC but rely on a smart card services component consisting of a special driver or service (often proprietary) provided with the other hardware equipment. Indeed, the requirements of such PC based smart card related applications are not well addressed by PC/SC (PC/SC does not provide all services needed, it is mostly geared to sending APDUs to smart cards through PC/SC compliant smart card readers).

Tracing can also be used in non-PC environments such as POS (point of sale) terminals, telephone booths with internet access and smart card reader (for credit cards and phone cards), and healthcare kiosks with healthcare smart card reader, etc. Smart card related applications then reside in non-PC environments (other hardware equipments). It should be noted that sometimes, apparently non-PC environments (such as electronic airline passenger check-in terminal) use standard PC components internally, both hardware (such as PC motherboards or PC processors etc.), and software (such as Windows^{™} or Linux operating systems) and are therefore PC environments.

Current techniques used for tracing have a number of disadvantages, in particular the ones listed below.
1. When tracing is performed on a PC, each of the smart card related applications installed on the PC must know the existence of the tracer in order to be able to notify the tracer whenever an APDU is sent and needs to be traced. Consequently, smart card related applications become dependent on the tracer and need to implement specific notification mechanisms. This problem exists in non-PC environments too. This is inconvenient for the developers of smart card related applications, who need not only to develop the smart card related application, but also part of the smart card related tools (i.e. the tracer notification mechanisms to be integrated in the smart card related application) needed to test their smart card related applications.
2. When a smart card related application has been developed and released without a tracing capability, and when at a later stage it turns out that tracing is needed, the smart card related application source code needs to be modified, recompiled, retested, revalidated and the smart card related application needs to be re-released.
3. A problematic side effect of the constraints of point 2 lies in the fact that any bug introduced inadvertently in mechanisms for smart card related applications' notification to the tracers could result in errors such as a wrong APDU being traced, no APDU being traced, or even worse in a smart card related application malfunction affecting not only the tracing feature but other features as well. The tracer, which is usually meant to test, debug or diagnose a smart card related application is therefore presently dependent on this smart card related application and on its potential bugs. In other words, the traces that are obtained according to state-of-the-art methods can be wrong either because the smart card related application has bugs, or because the tracing feature (notification mechanism) of the smart card related application has bugs, which makes it more complex to locate the bugs.
4. The problems 1 to 3 get worse when the smart card related applications have been implemented in languages different from the one in which the tracer was implemented. While it is natural for a smart card related application written in a certain language (for example C++) to notify an tracer implemented in the same language (C++), it is a lot more difficult for a VB (Microsoft^{™} Visual Basic) smart card related application to notify an tracer implemented in Java or C++ rather than VB. The same is true whenever different languages are used for the smart card related application and the tracer.
5. Another problem can be encountered although identical programming languages are used on both sides, when the platforms are different. For example, let's consider the following scenario. A C++ smart card related application resides on a UNIX server. The UNIX server is a CMS (Card
   Management System), which is a well-known type of server designed to administrate a set of smart cards. The server based C++ smart card related application sends APDUs to a set of smart cards, each smart card being connected to a Microsoft^{™} Windows PC. The APDUs are traced on the
   Microsoft^{™} Windows PCs with a C++ ADPU tracer located on each PC.
   The communication between the UNIX server and the PCs can be performed through a variety of mechanisms well known in state of the art (IPC - Inter Process Communication). In such a scenario, although the smart card related application and the tracer are both developed in the same language (C++), some difficulties may be experienced due to the fact that the platforms are different (UNIX server versus Microsoft^{™} Windows
   PC). Indeed, the same language may behave differently and may require careful adaptation in cross-platform environments. By cross-platform environments we mean environments including different types of computers (such as Microsoft^{™} Windows PCs and UNIX servers). An example of adaptations sometimes required by cross-platform environments is type conversion, since identical C++ types may be stored on different lengths such as 32 bits on the Microsoft^{™} Windows PC and 64 bits on the UNIX server.
6. Currently, smart card related applications that use tracing normally implement their own tracer. For example, spy software often have their own built-in tracing capabilities. However such tracers are often a mere plug-in in a smart card related application (the tracer serving the main requirements of that particular application only) rather than a fully-fledged tracer offering extensive features. Since different smart card related applications use different tracers, users of those tracers need to get used to a multitude of different tracers.
7. Tracers may have a scripting function offering the option to replay certain APDUs which were traced. The way this scripting function works and the format of its traces vary from tracer to tracer. Therefore you cannot copy-paste the traces obtained in one tracer and expect to paste it in another one for replay (trace translation to the receiving tracer format is needed).

### Summary of the invention:

According to the present invention, the problems inherent to state-of-the-art smart card communication tracers are solved as follows.

A substitution technique is used, and an interface is implemented. There are three different contexts in which this solution is applied.

The first context concerns smart card related applications relying on standard smart card services components (such as PC/SC). Standard smart card services components are replaced by modified smart card services components when the smart card related application is launched. Modified smart card services components perform the tracing operation and reroute communications to the standard smart card services components. The tracing can be performed before or after the rerouting.

In a preferred embodiment, substituting the standard smart card services components is performed by a hooking mechanism put in place for each such standard smart card services component. A hooking mechanism is a method for inserting software into another piece of software. The term "hook" refers to the software that gets inserted into another piece of software.

For example, in Microsoft^{™} Windows operating systems, when a smart card services component is implemented in the form of a DLL, the hooking consists in loading the hook when the smart card related application is launched. Therefore when the smart card related application later executes and attempts to load the real smart card services component DLL, the Microsoft^{™} Windows operating system considers that the real smart card services component DLL has already been loaded and discards the call.

Thanks to this substitution, the aforementioned smart card related applications do not need to be modified by their developers, and do not even need to be aware of the existence of the tracer. No involvement of and no information from the smart card related applications developers are needed. A smart card related tool (for example an SDK) incorporating a tracer and implementing such substitution can trace the communications of any smart card related application relying on standard smart card services components.

The second context concerns smart card related applications relying on proprietary smart card services components. The same substitution technique (such as hooking mechanism) is used. However, only developers having access to the detailed specifications of such proprietary smart card services components can implement the substitution. Therefore a smart card tool according to the invention does not necessarily integrate substitution techniques for all possible proprietary smart card services components since the developers of the smart card tool may lack access to the relevant specifications. According to the invention, in order to mitigate this problem, tracers offer at least one interface for third parties substitution smart cards services components, such interface enabling tracing capability with substitution smart card services components not natively present in the smart card related tool. Advantageously, the interface is made platform independent thanks to an inter-process communication framework. E.G. CORBA or SOAP. Thanks to the interface of the invention, developers of proprietary smart card services components can decide to modify their proprietary smart card services components by using the interface directly inside their proprietary smart card services components in order to enable tracing capability natively, thereby removing the need for substitution smart card services components.

The third context concerns rare instances in which smart card related applications are not implemented according to state of the art methodologies, the smart card services components forming part of the smart card related applications instead of being in a different layer (the architecture lacking modularity). Unfortunately, such smart card related applications would still need to be modified in order to support tracing capability. However such smart card related applications would benefit from the aforementioned interface of the invention in that no matter what language and programming environment the smart card related application is written in and no matter which platform the smart card related application is running on (Microsoft^{™} Windows PC, UNIX server, etc.), the interface remains easily accessible.

The invention offers the possibility to use a unique tracer for all smart card related applications (even for those smart card related applications that already have a native tracer). There is no longer a need to learn how to use a multitude of tracers, and there is no longer a problem of interoperability between tracers such as the aforementioned scripting format translation issue.

Since the tracer is unique and addresses many different smart card related applications requirements, it makes sense to implement more features than in individual tracers of state of the art, each of which is developed for a specific purpose. For example, when multiple smart card related applications run concurrently and communicate with smart cards in parallel, several approaches can be taken to trace the communications. Some might consist in tracing each communication with a given smart card related application in a separate trace. Others may consist in tracing each communication with a given smart card in a separate trace. Yet others may chose to multiplex all traces in a single trace and to add tags before each traced element in order to identify between which smart card and smart card related application it took place. A tracer according to the invention can chose to offer all those options.

The invention will be better understood by reference to the following detailed description in connection with the accompanying drawings.

Figure 1 shows a tracer according to state of the art architectures.

Figure 2 represents a spy hardware monitoring communications between a handset and a smart card, and a host computer for analyzing the spied data.

Figure 3 shows the state-of-the-art architecture associated with spy hardware represented on figure 2.

Figure 4 details the architecture of tracers and spy hardware according to an embodiment of the invention.

Figure 5 describes the hooking mechanism used in a preferred embodiment of the invention.

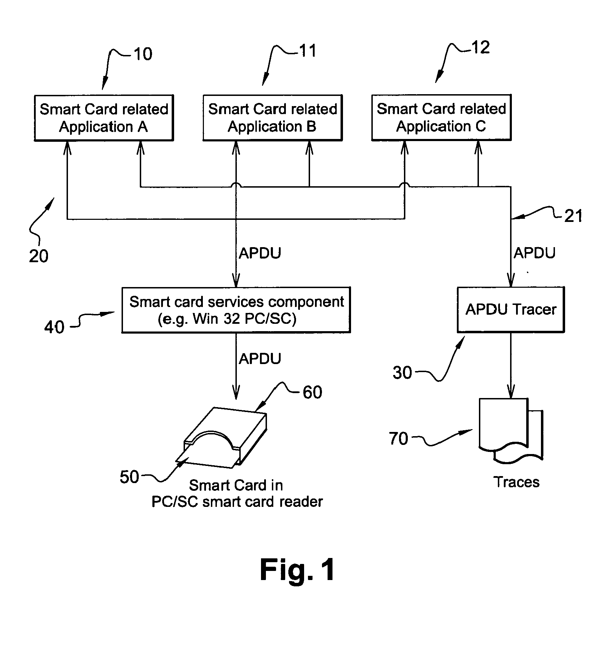

As can be seen on Figure 1, in order to send APDUs to or otherwise communicate with a smart card 50 through the PC/SC smart card reader 60, each smart card related application according to state-of-the-art architectures (such as applications 10, 11, and 12) needs to implement not only a call 20 to the smart card services components 40, but also a parallel call 21 to the tracer 30 in order to produce the traces 70.

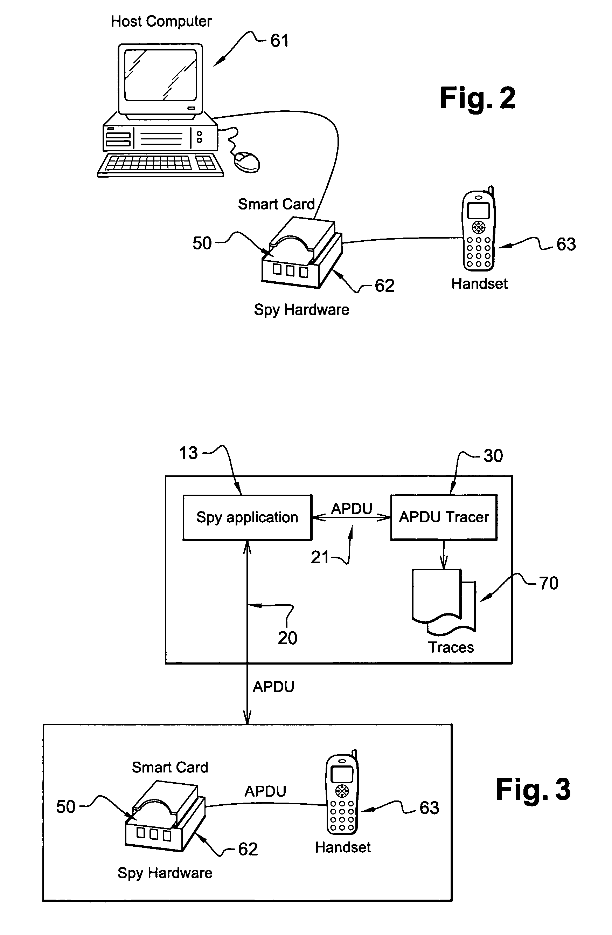

The spy hardware 62 of Figure 2 is connected to a host computer 61 (for example a standard PC), and communicates through a protocol such as for example TCP/IP. The spy hardware 62 has a component having the size, shape and connectors of a smart card, which component is inserted in a handset 63. The spy hardware 62 also has a smart card reader in which the smart card normally present in the handset 63 is inserted. The spy hardware 62 simulates a communication between the smart card 50 and the handset 63, each having the impression of communicating directly with the other, while in reality the spy hardware intercepts all communications and sends them to the host computer for analysis.

Any smart card related application of state of the art, such as applications 10, 11, 12 represented on Figure 1, or the spy application 13 represented on Figure 3 must know the existence of the tracer 30 in order to be able to notify the tracer 30 that an APDU has been sent and needs to be traced thanks to calls 21.

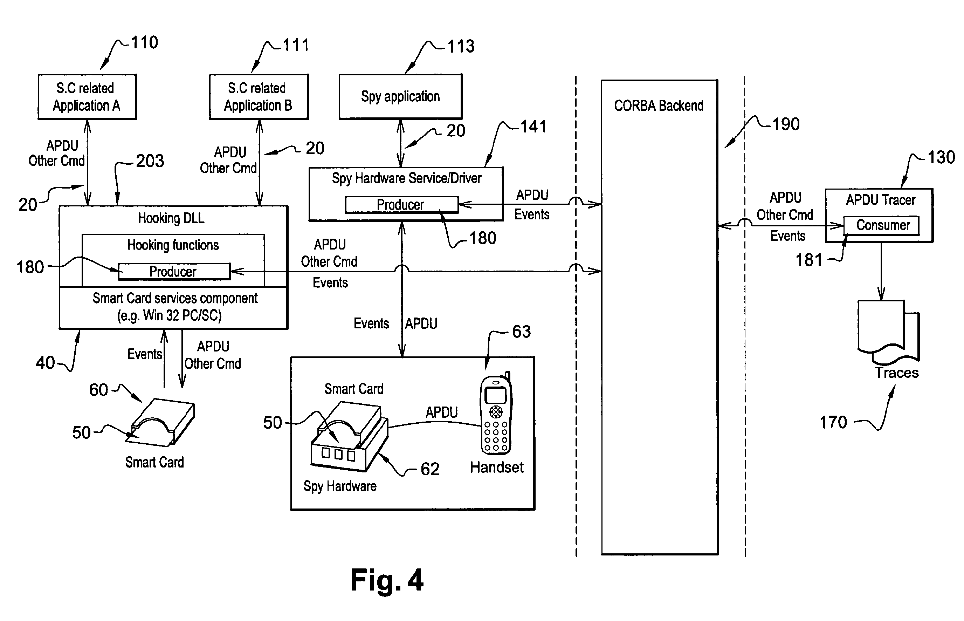

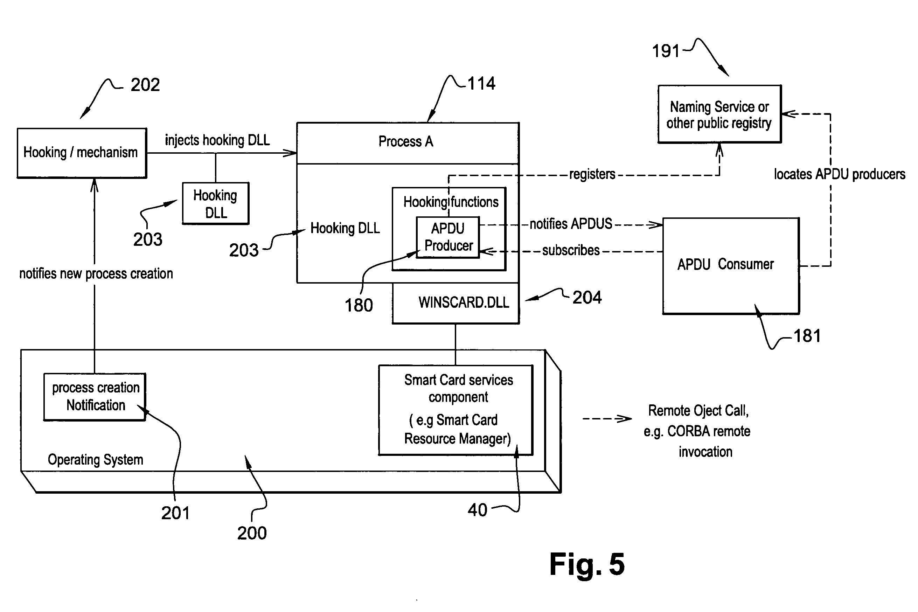

A preferred embodiment of the invention according to Figure 4 consists in using a substitution technique in order to fool the smart card related applications (applications 110, 111) into communicating with the substitution smart card base services components (hooking DLL 203) instead of real standard smart card services components (resource manager 40, via WINSCARD.DLL 204 not shown on Figure 4 but represented in detailed Figure 5). The spy application 113, which relies on proprietary smart card services components (spy hardware driver 141) does not need to use the substitution technique, because the developers of the proprietary smart card services components have added a producer 180 which sends tracing information to a consumer 181 integrated in a tracer 130 generating traces 170. Another solution would have consisted in implementing a substitution technique on the spy hardware service 141, the implementation of this solution being possible only for those having access to the specifications of such spy hardware service 141. Thanks to the invention, the spy application 113 does not need to re-implement a tracing feature and can benefit from a unified tracing feature.

Producers of Figure 4 are entities that "produce" APDUs and other communications on behalf of smart card related applications, while consumers are entities that "consume" these APDUs on behalf of the tracer for tracing purposes.

The terms "producer" and "consumer" are taken from the producer-consumer model known in state of the art. In this model, there is at least one job "producer" party and at least one job "consumer" party. The jobs can be executed in parallel.

In many situations, jobs that use the same resource have to be processed sequentially on a first-come, first-served basis. As known from state of the art, consumers preferably operate on a job queue created to store all the jobs as they come in. The producers deliver a new object to be processed by adding it to the consumer's queue. The consumer then pulls each object from the queue and processes it. When the queue is empty, the consumer goes to sleep. When a new object is added to the empty queue, the consumer awakes and processes the object.

In the embodiment of the invention shown on Figure 4, the tracer 130 is the only consumer, while three producers 180 are active, namely the hooking DLLs' producers (one for each smart card related applications 110 and 111, the smart card related applications 110 and 111 being based on standard smart card services components 40) and the spy hardware driver 141 producer (for the spy application 113 based on proprietary smart card services components (spy hardware driver 141).

However, multiple consumers could be used, for example one consumer per producer, which may in certain implementations facilitate the splitting of the traces 170 (one trace per producer), the trace 170 being otherwise an aggregation of all communications.

PC based smart card related applications 110, 111 and 113 do not require any modification for supporting the tracing feature, thanks to the producers provided in substitution smart card services components (for 110, 111) and real smart card services components (for 113).

In a variation of this embodiment (not represented on Figure 4), more than one standard smart card services component is used (not just PC/SC as on Figure 4).

In a preferred embodiment, the tracer is accessed via an inter-process communication framework such as CORBA or SOAP (CORBA backend 190 on Figure 4). CORBA is the acronym for Common Object Request Broker Architecture, an architecture that enables pieces of programs (e.g. software components or objects), to communicate with one another regardless of what programming language they were written in or what operating system they're running on.

Access to the tracer can be achieved by using standardized interfaces types such as interfaces written in IDL (interface description language) available with CORBA. IDL can be viewed as a common language for defining how to use a piece of software from another piece of software.

CORBA provides for registration of components and allows a component to find another component. This feature is used in the example of Figure 5 (thanks to the naming service 191). The observer pattern (known in state of the art) is applied. In the observer pattern, there are subjects and observers. As indicated on Microsoft^{™} MSDN, the logical model states that the observer observes the subject but this is actually a misnomer when implementing this pattern. More accurately, the observer registers with the subject, expressing its interest in observing. When a state change occurs, the subject notifies the observer of the change. When the observer no longer wishes to observe the subject, the observer unregisters from the subject. In the CORBA implementation of Figure 4, the substitution smart card services component 203 and the spy hardware driver 141 create an APDU producer CORBA object and make the CORBA reference of these objects available publicly, by registering them to a CORBA naming service 191. The consumer 181 of the tracer 130 list publicly available APDU producers, by accessing the CORBA naming service 191, connect remotely to these producers using CORBA object binding services, and registers as an APDU observers to be notified of APDUs. The CORBA naming service is not mandatory, and the object references of the APDU producers could be made public using other mechanisms, such as writing in a file. In general, any other inter-process object framework than CORBA can be used, such as SOAP.

The producer does not have to limit itself to sending APDUs, it can send many types of messages comprising APDU commands, smart card related events (such as smart card insertion, smart card removal, smart card reset, smart card power-up and smart card power-down, etc.) and other smart card related commands (e.g. USB commands for USB capable smart cards, power save mode, etc.).

In the embodiment of Figure 4, the tracer's consumer 181 acts as the only observer for the producers 180 of each smart card related application (110, 111, 113), each producer 180 acting as a subject. But many consumers 181 could be used as discussed earlier. As shown more in details on Figure 5, subjects register at the naming service. Observers can then locate subjects and subscribe to (or register with) the subjects. Subjects can then notify the observers when events occur.

Developers in a situation in which a substitution technique or a producer is not already available for their smart card related application or their smart card services component can implement a producer for their smart card related application or their smart card services component, the producer using an inter-process communication framework, for example by calling the CORBA backend 190 of Figure 4. The use of CORBA in the embodiment of Figure 4 provides cross-platform and cross-language capability. Cross-platform was already defined. By cross-language capability we mean the ability to use the tracer with smart card related applications implemented in many programming languages and/or environments. For example, a smart card related application developed in Borland^{™} C++, another one developed in Microsoft^{™} Visual C++ and yet another one developed in Microsoft^{™} Visual Basic can access smart cards concurrently and the APDUs are traced in parallel irrespective of the actual programming language in which the smart card related applications have been developed. There are much less restrictions on the implementation languages used for the "producer" or the "consumer".

A preferred substitution technique proposed by the invention for avoiding problems such as the ones above is the hooking mechanism of Figure 5. Figure 5 describes a Microsoft^{™} Windows operating system 200, including a process creation notification mechanism 201. As known from state of the art, such mechanism 201 can be the PsSetCreateProcessNotifyRoutine routine available on Microsoft^{™} Windows 2000 and Microsoft^{™} Windows XP operating systems.

Such mechanism 201 is used by this embodiment of the invention to force the operating system to execute a hooking mechanism 202 whenever a Microsoft^{™} Windows process is created.

Since a smart card related application is a Microsoft^{™} Windows process (in this embodiment of the invention), the hooking mechanism is executed for all smart card related applications. Microsoft^{™} Windows processes that are not smart card related applications do not need to be recognized as such and the hooking mechanism may be executed without causing any harm.

The first step of the hooking mechanism according to the embodiment of Figure 5 consists in loading the real smart card services component 204, which is WINSCARD.DLL, and the substitution smart card services component 203, which is a hooking DLL in the example of Figure 5. For example, the first step may consist in calling the Microsoft^{™} Windows LoadLibrary function which maps the specified DLL file into the address space of the Microsoft^{™} Windows process detected by the mechanism 201.

The second step of the hooking mechanism according to the embodiment of Figure 5 consists in locating the functions of the smart card services components (both 203 and 204) that have just been loaded. Calling the Microsoft^{™} Windows GetProcAddress function for each function of the smart card services components is one way to execute this second step.

The third step of the hooking mechanism according to the embodiment of Figure 5 consists in replacing the location of the functions of the real smart card services component by the location of the functions of the substitution smart card services component. For example, the hooking mechanism can inject machine instructions code at the addresses of the WINSCARD.DLL functions causing those functions to jump to the hooking functions. The original machine instruction code overwritten by the jump instructions needs to be saved.

In a fourth step, the execution of the Microsoft^{™} Windows process detected by the mechanism 201 is resumed.

Therefore, if the Microsoft^{™} Windows process detected by the mechanism 201 is a smart card related application using WINSCARD.DLL 204 as a smart card services component, this process will attempt to load WINSCARD.DLL 204 in order to use it. However, Microsoft^{™} Windows will consider that WINSCARD.DLL 204 has already been loaded and will ignore the attempt to load it and further attempts to locate its functions as this has already been done.

Subsequent attempts of the smart card related application to use WINSCARD.DLL 204 functions consequently result in the hooking DLL functions being used instead. The hooking DLL may consist of a wrapper for WINSCARD.DLL, i.e. it does not have to re-implement WINSCARD.DLL but can instead simply execute its tracing tasks and then call the real WINSCARD.DLL functions. In case original machine instruction code was overwritten, the stored original machine instructions have to be executed first. Tracing tasks can also be executed after the real WINSCARD.DLL function is called, or in certain instances tracing tasks may be executed partially before and completed after the call of the real WINSCARD.DLL function. It is also possible to modify the parameters of the WINSCARD.DLL functions called by the smart card related application. For example if the smart card application sends an APDU writing data into a file, it is possible to change the data that is written (for testing purpose, etc.). It is also possible to act as a smart card simulator by modifying the answer of the APDUs sent by the smart card accepting device (in order to simulate a different behavior of the smart card). It is also possible to add, remove or otherwise filter the communications. For example, let's consider a smart card application that sends APDUs in loop until a counter reaches zero, each APDU performing a task and then decrementing the counter inside the smart card. It is possible to send (from the hooking DLL) an APDU erasing the counter (if such APDU exists) instead of having to go through the whole loop (lengthy operation which may be useless in the context of testing).

Figure 5 is not a limitative example of hooking mechanisms according to the invention and other types of hooking mechanisms may be implemented, either on Microsoft^{™} Windows or on other operating systems. Also, multiple hooking mechanisms can be implemented, since there might be different types of smart card services components. In such cases, the hooking mechanism will be repeated for each Microsoft^{™} Windows process detected by the mechanism 201 as many times as they are smart card services components to hook.

Thanks to the invention, smart card related application's awareness of the existence of a tracer is not required. Additionally, smart card related applications do not depend on the existence of a tracer. Also, a single unified tracer can be used instead of a plurality of tracers for different kinds of smart card related applications.

The invention is also advantageous considering that in many business segments the smart card services components are developed by a limited number of smart card specialized companies, while smart card related applications are developed by a much higher number of companies such as VARs (value added resellers), less specialized in smart cards, and who can benefit from the work done on the smart card services components, thereby reducing the development efforts and focusing the development efforts on the most competent parties.

Although the invention has been described in relation with smart cards, it should be noted that it is applicable to authentication portable devices emulating smart cards, including smart card chips, or behaving like smart cards. Secure MMC and

USB authentication keys are examples of such authentication portable devices. Therefore the invention applies to tracers used in conjunction with such portable devices as well.

Variations of the invention based on such authentication portable devices are covered by the use of the generic term "smart card" which designates not only traditional smart cards but also any above type of authentication portable device.

## Claims

1. Method for tracing communications between a smart card and a smart card related application, said smart card related application communicating with said smart card via a smart card services component, **characterized in that** the method comprises the replacement of said smart card services component by a modified smart card services component after the smart card related application is launched.

2. Method according to claim 1, in which a hooking mechanism performs the smart card services component replacement.

3. Method for tracing smart card communications, a smart card related application having access to said smart card communications via a smart card services component, **characterized in that** the method comprises the replacement of said smart card services component by a modified smart card services component after the smart card related application is launched.

4. Method according to claim 3, in which a hooking mechanism performs the smart card services component replacement.

5. Method according to claim 3 or 4, in which the smart card related application is able to communicate with the smart card via a smart card services component.

6. Method according to claim 3, 4 or 5, in which a smart card services component is a driver or service for a spy hardware.

7. Method according to any previous claim, in which a smart card services component complies with one of the following standards: PC/SC, OCF, PKCS#11.

8. System comprising a tracer, the system being arranged to carry out a method according to any previous claim.

9. System according to claim 8, in which the tracer comprises an interface according to an inter-process communication framework, the interface allowing a smart card related application or a smart card services component to trace smart card communications if said smart card related application or respectively said smart card services component is modified in order to use said interface.

10. System according to claim 8 or 9, in which the inter-process communication framework is CORBA or SOAP.

11. Smart card related tool running on a Personal Computer, the smart card related tool comprising a system according to claim 8, 9 or 10.
